# EUROPÄISCHE PATENTSCHRIFT

(11) **EP 3 769 385 B1**
(45) Veröffentlichungstag und Bekanntmachung des Hinweises auf die Patenterteilung: **24.09.2025**
(21) Anmeldenummer: 19711285.7
(22) Anmeldetag: 12.03.2019
(51) Int. Cl.: H02G 3/12, H02G 3/14

(54) **MONTAGEANORDNUNG FÜR HAUSTECHNIKMODULE**
MOUNTING ASSEMBLY FOR DOMESTIC MODULES
SYSTÈME DE MONTAGE POUR MODULE DOMESTIQUE

(30) Priorität: 18.03.2018 DE 102018002192
(43) Veröffentlichungstag der Anmeldung: 27.01.2021
(73) Patentinhaber: Dr. Ralf Hinkel Holding GmbH, 67657 Kaiserslautern (DE)
(72) Erfinder: HINKEL, Ralf, 67724 Höringen (DE)
(74) Vertreter: Pietruk, Claus Peter
(86) Internationale Anmeldenummer: PCT/EP2019/056075
(87) Internationale Veröffentlichungsnummer: WO 2019/179813

(56) Entgegenhaltungen:
- EP-A1- 0 801 830
- EP-A1- 2 107 765
- DE-U1- 202004 005 837

## Beschreibung

Die vorliegende Erfindung betrifft das oberbegrifflich Beanspruchte und bezieht sich somit darauf, wie Module der Haustechnik für Benutzer besser angeordnet werden können.

In der Haustechnik werden eine Reihe von Modulen verwendet, um einem Benutzer zu ermöglichen, beispielsweise Licht einzuschalten oder zu dimmen, Rollläden elektrisch zu steuern, Klimaanlagen und Heizungen einzustellen, mit an einer Türstation befindlichen Personen eine Kommunikationsverbindung herzustellen, aber auch, um aktuelle Raumdaten wie Temperatur, Luftfeuchtigkeit usw. zu erfassen und gegebenenfalls anzuzeigen, Bewegungssensoren, Geräuschsensoren und/oder Rauchdetektoren sowie andere Sensoren der Sicherheitstechnik in von Benutzern bewohnten Räumen anzuordnen usw.

Aus der DE 2029040058371 ist ein Schaltergehäuse zur Aufputzmontage und zur Aufnahme eines elektronischen Moduls mit zumindest einem Modulgehäuse bekannt, auf das zumindest eine Schaltwippe montierbar ist und das zumindest einem Zwischenrahmen aufweist, der mit zumindest einer Bodenplatte verbindbar ist, wobei die Elemente in bestimmter Reihenfolge miteinander verbunden werden müssen.

Aus der EP 0801830B1 ist ein Anbring-Rahmen bekannt, deren einer Vorderöffnung eines Kabelkanals befestigt wird. Der Rahmen soll eine Quadratische Form aufweisen und auf jeder Seite mit einer Einschnappanordnung in Form einer Führungs- und Beabstandungseinrichtung und mit wenigstens einem Haken gebildet sein, um mit Flanschen am Kabelkanal zusammenzuwirken. Dabei soll eine Montage in zwei um 90° verschiedenen Positionen möglich sein.

Aus der EP 2107765A1 ist eine Wohnungsstation für eine Hauskommunikationsanlage bekannt, die ein Gerätegehäuse und Audio-Komponenten mit einem Mikrofon und einem Lautsprecher aufweist. Dabei soll das Mikrofon über elektrische Anschlüsse an an einer Leiterplatte angeschlossen werden, die von federnden Anlagekontaktelementen gebildet sind, welche elektrisch leitend auf Kontaktflächen der Leiterplatte aufliegen. Das Gerät besitzt eine verrastbare Abdeckhaube,

Derartige Module sollen einerseits preiswert sein, was einschließt, dass auch deren Montage preiswert sein soll; gleichzeitig sollen derartige Module aber auch hohen ästhetischen Anforderungen genügen, was regelmäßig nur dann der Fall ist, wenn eine ästhetisch befriedigende Anbringung ermöglicht ist und was überdies oftmals eine exakt horizontale bzw. vertikale Ausrichtung voraussetzt. Einige der erwähnten Module werden an der Wand angeordnet und aus der Wand heraus mit Strom versorgt. Dies gebietet es, ein zu einfaches Abziehen der Module von der Wand zu verhindern, da andernfalls womöglich Kinder, die die Module unbeobachtet von der Wand abziehen, elektrischen Stromschlägen ausgesetzt sein könnten.

Es ist gebräuchlich, mehrere Module, gegebenenfalls auch einzelne Module, in einem den Rand der Module umfassenden Abdeckrahmen anzuordnen. Dieser kann so gestaltet werden, dass die Benutzermodule nicht ohne weiteres daraus entfernt werden können. Die Verwendung eines Abdeckrahmens ist allerdings oftmals schon aus architektonischen Gründen unerwünscht und erhöht zudem die Kosten.

Es ist erstrebenswert, eine leicht zu montierende Haustechnikbenutzermodulanordnung anzugeben, die zugleich sicher ist.

Die Aufgabe der vorliegenden Erfindung besteht darin, Neues für die gewerbliche Anwendung bereitzustellen. Bevorzugte Ausführungsformen finden sich in den Unteransprüchen.

Gemäß einem ersten Grundgedanken wird somit eine Haustechnik-Benutzermodulanordnung nach Anspruch 1 vorgesehen.

Es wird also zunächst die Sicherung bzw. Befestigung der Haustechnik-Benutzermodule ohne Rahmen oder dergleichen ermöglicht. Die Anordnung kann somit ästhetisch ansprechender gebildet werden, ohne die Sicherheit zu beeinträchtigen. Da die Durchtrittsöffnungen auf die Sicherungsanordnung führen, kann bereits durch ein einfaches geeignetes Werkzeug wie einen Schraubenzieher oder dergleichen ein Außereingriff- Treten erreicht werden. Um dies zu bewirken, müssen im Regelfall auch lediglich geringe Kräfte aufgewandt werden. Es ist möglich und vorteilhaft, wenn die Sicherungsanordnung montageplattenseitig mit einer von der Wand abstehenden Lasche gebildet ist, in welcher eine Öffnung, bevorzugt ein Durchtrittsloch vorgesehen ist, und am Modulrand ein Ansatz angeordnet ist, der im Sicherungsfall zumindest in, bevorzugt durch die Öffnung geführt ist und zum Abziehen von der Öffnung weg beweglich gebildet ist.

An der Lasche kann ein insbesondere einstückig mit dem Modulrand gebildeter Haken in Eingriff treten. In einem solchen Fall wird die Sicherung durch den Eingriff des am Modulrahmen vorgesehenen Hakens an der Lasche bewirkt. Dass eine entsprechende Hakenanordnung aber nicht zwingend einstückig mit bzw. aus dem gleichen Material wie der Modulrahmen, also typisch aus Kunststoff, gebildet sein muss, sei erwähnt.

Es ist alternativ und/oder zusätzlich auch möglich und vorteilhaft, wenn bei der Haustechnik-benutzermodulanordnung der Ansatz am Modulrand ein Verriegelungshaken ist, der in das Durchtrittsloch eindringt und der zum Abziehen unter Verwendung eines durch die Durchtrittsöffnung führbaren Werkzeuges in Richtung auf die Montageplattenmitte außer Eingriff gedrückt werden kann.

Prinzipiell wäre es möglich, den Ansatz am Modulrahmen entfernbar zu bilden, etwa, indem ein Stift durch die Durchtrittsöffnung hindurch und dann bis in die Lasche hinein bzw. durch diese hindurch eingeschoben wird, oder indem eine Schraube durch das Durchtrittloch gedreht wird oder dergleichen. Besonders bevorzugt ist jedoch eine Verriegelung des Moduls an der Montageplatte. Dazu ist möglich und vorteilhaft, dass dann die Montageplatte zur Sicherung gegen Abziehen Verriegelungshaken aufweist, die von der Wand abstehen und welche auf der vom Montageplattenzentrum abgewandten Seite Verriegelungshaken-Eingriffsenden besitzen, und dass das Haustechnik-Benutzermodul einen Rand aufweist, der zum Montageplattenzentrum hin ein Verriegelungshaken-Eingriffsende-Widerlager besitzt und der mit einer auf den Verriegelungshaken führenden Durchtrittsöffnung versehen ist.

Es wird auch damit die Sicherung bzw. Befestigung des Haustechnikbenutzermoduls ohne einen Abdeckrahmen oder dergleichen an einer Montageplatte ermöglicht. Die Anordnung kann somit ästhetisch ansprechender gebildet werden, ohne die Sicherheit zu beeinträchtigen. Da die Durchtrittsöffnungen auf die Verriegelungshaken bzw. zu den Laschen oder anderen Elementen einer Sicherungsanordnung führen, können Verriegelungshaken oder laschendurchdringende Sicherungsmittel durch ein geeignetes Werkzeug wie einen Schraubenzieher oder einen dünnen Stift leicht von ihren Verriegelungshaken-Eingriffsende-Widerlagern bzw. aus den Laschenöffnungen weg bewegt werden. Dazu müssen auch lediglich geringe Kräfte aufgewandt werden, weil die Sicherungsanordnung nicht zugleich benutzt werden muss, um auch die Anlage des Benutzermoduls zu gewährleisten.

Die erfindungsgemäße Anordnung ist für eine Vielzahl von Modulen geeignet, beispielsweise für Module, die ausschließlich als Sensoren dienen, wie Temperatursensoren, Sensoren auf Ultraschallbasis, auf Geräusche, Helligkeit usw. reagierende Bewegungssensoren, Rauchdetektoren usw. oder aber solche Funktionalitäten zusammen mit anderen Funktionalitäten integrieren; bei den Benutzermodulen kann es sich auch um Schaltmittel wie Mehrfachschaltmittel, Regler etwa für die Lichthelligkeit oder Lichttemperatur handeln, genauso wie drahtgebundene oder drahtlose Fernsteuerungen etwa für Audio-Videoanlagen, Rollläden und Jalousien usw. realisiert sein können. Die Haustechnikbenutzermodule können zusätzlich und/oder ausschließlich Displayfunktionalitäten aufweisen bzw. zur Anzeige von Videobildern, erfassten oder gewünschten Temperaturen, Luftfeuchtigkeit, Einstellungen von Lüftungen, Heizungen etc. dienen. Zudem ist beispielsweise möglich, dass das Haustechnikbenutzermodul als Gegensprechstelle dient, um mit einer Türkommunikationsanlage in Verbindung zu treten. Dass im Übrigen mit den Modulen ein Internetzugang ermöglicht sein kann, etwa um als Sprachassistent zu dienen, sei erwähnt. Die Montageplatte kann gegebenenfalls unmittelbar an einer Wand festgeschraubt werden, was etwa dort vorteilhaft ist, wo Hohlwände mit Rigipsplatten oder dergleichen gebildet sind, die Benutzermodule in Schrankwänden einzulassen sind oder dergleichen. Typisch wird aber zunächst ein Halter fest in der Wand verankert, der wiederum für die Anbringung der Montageplatte vorgesehen ist.

Die erfindungsgemäße Anordnung der Montageplatte an einem Halter, der selber fest verankert ist, erlaubt es, die Montageplatte besonders leicht auszurichten, insbesondere horizontal, so dass bei quadratischen oder rechteckigen Modulen eine horizontale bzw. vertikale Ausrichtung der Modulkanten besonders einfach ist. Gerade dort, wo großflächige Module wie Displays angebracht werden sollen, ist dies besonders hilfreich.

Die Montageplatte wird typisch einen zentralen Durchbruch aufweisen, also als Rahmenplatte gebildet sein. Eine besonders gute Sicherungswirkung, d.h. z.B. Verriegelungs- und Haltewirkung kann preiswert erreicht werden, indem die erforderlichen Elemente aus Metallblech gebildet sind, insbesondere einstückig. Der Fachmann wird erkennen, dass es mit üblichen Stanz-, Präge- und Umformwerkzeugen ohne weiteres möglich ist, die Montageplatte einstückig aus Metallblech zu bilden, was hervorragende Sicherungs- bzw. Halte- und/oder Verriegelungskräfte erlaubt. Derartige, insbesondere einstückige, Metallteile sind nicht nur preiswert herzustellen, sondern auch gut, beispielsweise ohne Bruchgefahr, zu verarbeiten und zu montieren und daher allgemein bevorzugt.

Im Regelfall werden die Module an in der Wand geführte Leitungen angeschlossen, beispielsweise an Lichtnetzleitungen und/oder Datenleitungen. Aus diesem Grund wird im Regelfall in der Wand eine Ausnehmung vorgesehen, die als Rahmenplatte gebildete Montageplatte vor dieser Ausnehmung angebracht, erfindungsgemäß an einem in der Ausnehmung fest verankerten Halter, und dann wird das Modul mit seinem rückwärtigen Endbereich durch den in der Rahmenplatte vorgesehenen Durchbruch durchgeschoben. In einem solchen Modul sind bevorzugt rückseitig Anschlüsse für entsprechende, in der Wand geführte Leitungen vorgesehen.

Das Haustechnikbenutzermodul, das anliegen wird, kann wahlweise in Anlage an der Montageplatte selbst oder in Anlage an der Wand gehalten werden. Im Regelfall und bevorzugt wird der Sicherungseingriff dicht am Außenrand der Montageplatte erfolgen, d.h. die Verriegelungshaken, Laschen für das In-Eingriff-Treten oder dergl. werden am vom Montageplattenzentrum abgewandten Bereich angeordnet. Dort, wo die Montageplatte einen Durchbruch aufweist, kann sich die lichte Weite dieses Durchbruches an Normvorgaben orientieren, etwa an typischen Größen von in einer Wand fest verankerten Haltern. Die Breite des den Durchbruch umgebenden Rahmens ist dagegen bestimmt von der Größe der Module. Darauf wird aber im Allgemeinen ein so breiter Bereich belassen, dass das Modul mit einem umlaufenden Dichtring darauf aufliegen kann, und zwar selbst dann, wenn etwa noch Schrauben in dem Rahmenbereich durch Langlöcher zur Gewährleistung einer Horizontaljustierbarkeit geführt sind. In gleicher Weise kann eine Dichtung der Montageplatte gegen den Halter bzw. die Wand erreicht werden. Damit lässt sich eine hervorragende Dichtigkeit gegen Feuchtigkeit, Staub und dergleichen realisieren, die zudem optisch völlig unauffällig erreicht werden kann. Ein explosionsgeschützter Aufbau ist möglich, dass das Vorsehen von Dichtungen nicht zwingend ist, sei jedoch betont. In einer besonders bevorzugten Variante dienen die Verriegelungshaken, Sicherungslaschen oder dergl. wie zuvor bereits erwähnt ausschließlich zum Sperren gegen Abziehen des Moduls von der Wand weg, nicht jedoch dazu, das Benutzermodul auch an die Wand bzw. die Montageplatte heranzuziehen. Dies ist dort vorteilhaft, wo die Sicherungsanordnung Verriegelungshaken umfasst, die besonders leicht mit einem geeigneten Werkzeug entsperrbar bzw. entrast- oder entriegelbar sein sollen, aber gleichwohl eine besonders hohe Anlagekraft realisiert werden soll, etwa weil ein Dichtring hinreichend stark gepresst werden muss, die Gesamtanordnung erheblichen Vibrationen ausgesetzt ist, was in einer stark vibrierenden Umgebung, etwa bei Anordnung der Haustechnikbenutzermodulanordnung in Fahrstühlen der Fall sein kann, aber auch bei Benutzung der Gesamtanordnung in Zügen und dergleichen, in denen herkömmliche, nicht dedizierte Haustechnikbenutzermodulanordnungen ebenfalls vorteilhaft einsetzbar sind.

Eine erfindungsgemäß bauliche Möglichkeit, eine Trennung der Sicherung z.B. durch Verriegelung von der Aufbringung der zum Anlegen auf das Modul aufzubringenden Kräfte zu erreichen, besteht darin, das Benutzermodul an seinem dem Benutzer zugewandten Ende gegen Abziehen zu verriegeln bzw. auf andere Weise zu sichern, während das vom Benutzer abgewandte Ende, das typisch durch den Durchbruch einer rahmenförmigen Montageplatte in eine Wandeintiefung hindurchgeschoben wird, eine Eingriffsstelle aufweist, an welcher auf das Haustechnikbenutzermodul eine dieses in Anlage an die Wand bzw. die Montageplatte zwingende Kraft durch die Montageplatte ausgeübt wird.

Prinzipiell sind unterschiedliche Möglichkeiten gegeben, wie von der Montageplatte auf das Haustechnikmodul Kräfte ausgeübt werden können, die das Modul an die Wand beziehungsweise an die Platte zwingen. So könnte etwa an der Montageplatte oder dem Halter, an welchem diese befestigt ist, ein Magnet vorgesehen werden und auf dem einschubseitigen Ende des Haustechnikbenutzermoduls ein entsprechender Gegenmagnet. Erfindungsgemäß weist die Montageplatte zumindest einen Federarm auf, der vom Benutzer wegführt und der so dimensioniert und angeordnet ist, dass das Haustechnikbenutzermodul an dessen freien Ende unter Auslenken des Federarms vorbeigleitet, bevor die Sicherungsanordnung in Sicherungs-eingriff tritt, also z.B. die Verriegelungshaken mit ihren Widerlagern in Eingriff treten, wobei am Haustechnik-Benutzermodul rückseitig eine Eintiefung vorhanden ist und der Federarm an seinem freien Ende unter Bildung einer Gleitfläche derart gebogen ist, dass der zum Benutzer weisende Rand der Eintiefung auf der Gleitfläche aufliegt, wobei die Federkraft der Arme so groß ist, dass das Haustechnikbenutzermodul ohne zusätzliche, es gegen die Montageplatte drückende Kraft noch nicht in Sicherungseingriff gezogen wird, also z.B. an den Verriegelungshaken vorbei herangezogen wird, sondern noch, insbesondere ohne Werkzeug, von der Montageplatte abgezogen werden kann. Zugleich soll die Federkraft ausreichen, um das noch nicht verriegelte bzw. in Sicherungseingriff befindliche Modul gegen eine ungewollte Herausbewegung zu sichern. Diese Anordnung hat mehrere Vorteile. Dadurch, dass zunächst nur die Federarme mit dem Haustechnikbenutzermodul in Eingriff treten, also die Verriegelungshaken noch nicht hinter die Widerlager gelangen bzw. die Sicherung sanordnung auf andere Weise in Eingriff tritt, etwa indem durch an der Montageplatte vorhandene Laschen ein am Modulrand vorgesehener Haken, Ansatz oder dergl. tritt, kann das Benutzermodul noch jederzeit herausgezogen werden. Dies ist insofern vorteilhaft, als dadurch die Montageplatte z.B. besonders genau horizontal ausgerichtet werden kann. Da die Verriegelungshaken oder dergl. erst ansprechen werden, kurz bevor das Haustechnikmodul in Anlage an die Montageplatte bzw. die Wand gelangt, ist die Ausrichtung durch mehrfaches Herausziehen, Nachjustieren der Montageplatte usw. ohne weiteres möglich, ohne dass jedes Mal ein Werkzeug zum Entriegeln des Benutzermoduls bzw. zum Lösen des Sicherungseingriffes benötigt würde.

In einer besonders bevorzugten Variante sind mehrere Federarme vorgesehen, die sich insbesondere entlang der Einschubachse erstrecken können und an einander diametral gegenüberliegenden Stellen angeordnet sein können. Mehrere Federarme diametral gegenüber liegend sorgen dafür, dass das Modul nicht in einer Richtung nach vorne geneigt werden kann. Eine hinreichend große Federarmbreite sorgt dafür, dass das eingeschobene Modul bei korrekt ausgerichteter Montageplatte nicht gegen die Horizontale verkippen wird, weil andernfalls ein Rückdrehmoment von der Gleitfläche auf den zum Benutzer weisenden Rand der Eintiefung ausgeübt wird. Breite Federarme tragen also zu einer reproduzierbaren Ausrichtung relativ zur Montageplatte bei. Prinzipiell wäre es auch möglich, mehrere Federarme nebeneinander anzuordnen. Die von den Federarmen auf das Modul ausgeübte Kraft wird aber größer sein, wenn die Federarme hinreichend breit sind. Es sei im Übrigen diesbezüglich betont, dass eine Festlegung der Haltekräfte nicht nur über die Breite der Federarme möglich ist, sondern auch deren Länge, Dicke und so weiter mitbestimmend ist.

Es ist vorteilhaft, dass dann, wenn zur Sicherung Verriegelungshaken vorgesehen sind, diese möglichst weit voneinander an einer Kante des Montagerahmens angeordnet sind. Dies erlaubt trotz schmaler Verriegelungshaken eine zusätzliche Gewährleistung einer präzisen Ausrichtung relativ zur Montageplatte. Relativ schmale Verriegelungshaken sind vorteilhaft, weil dies die Kraft, welche mit einem durch die Durchtrittsöffnung geführten Werkzeug auf die Verriegelungshaken ausgeübt werden muss, um verriegelte Haustechnikbenutzermodule zu entsperren, deutlich reduziert. Schmale Verriegelungshaken können verwendet werden, weil die Verriegelungshaken eben nur als solche zu dienen haben, nämlich zum Verriegeln der Module an den Montageplatten, wohingegen die zum Anziehen gegen die Montageplatte bzw. die Wand erforderliche Kraft, mit der das Haustechnikbenutzermodul in Anlage gehalten wird, anders aufgebracht werden kann. Gleiches gilt auch für z.B. die Verwendung von Laschen an der Montageplatte; wo solche Laschen verwendet werden, ist es vorteilhaft, sie randnah anzuordnen.

Die Erfindung wird im Folgenden nur beispielhaft anhand der Zeichnung beschrieben. In dieser ist dargestellt durch:
- Figur 1: verschiedene Stufen der Montage einer Haustechnik-Benutzermodulanordnung in perspektivischer Ansicht;

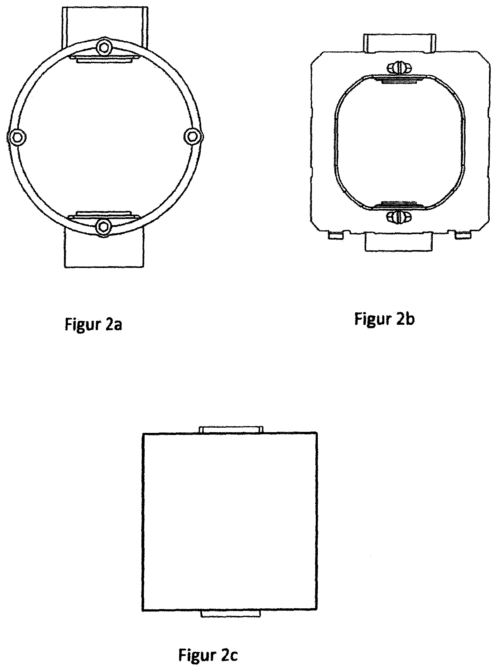

- Figur 2: die entsprechende Ansicht frontal von vorne;

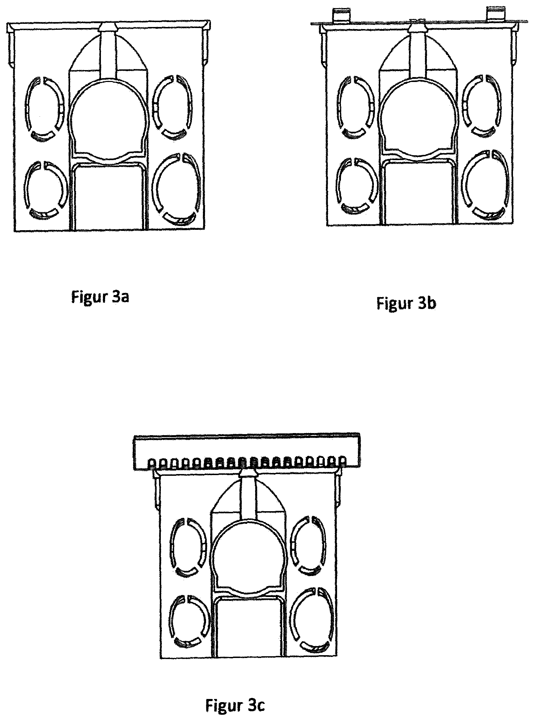

- Figur 3 die: entsprechenden Ansichten exakt von oben;
- Figur 4a: die Haustechnikbenutzermodulanordnung mit Montageplatte, Halter und Benutzermodul;
- Figur 4b: eine Schnittansicht entlang Linie A-A von Figur 4a mit zwei Detailausschnitten;
- Figur 4c-d: Detailschnitte aus Fig. 4b.
- Fig. 5: eine perspektivische Ansicht der Montageplatte für eine weitere Ausführungsform;
- Fig. 6a-c: die Montageplatte der weiteren Ausführungsform in verschiedenen Ansichten.
- Fig. 7: eine Schnittansicht eines Teils einer Montageplatte der weiteren Ausführungsform, wobei sich die Montageplatte der weiteren Ausführungsform in ihrem Halter befindet und ein Modul eingesetzt ist;
- Fig. 8 ab: perspektivische Ansichten einer weiteren Ausführungsform der Montageplatte von vorne und hinten, wobei die weitere Ausführungsform sich von den vorangehenden Ausführungsformen durch zusätzlich an den Seiten der Durchbruchsöffnung vorgesehene Erdungslaschen unterscheiden;
- Fig. 8c: die Ausführungsform der Fig. 8a und 8b in verschiedenen Seitenansichten.

Es sei darauf hingewiesen, dass in den Figuren die Wand, vor der die Haustechnikbenutzermodule angeordnet und in welcher die Halter befestigt sind, nicht dargestellt ist. Es wird aber einsichtig sein, dass der Halter für die Montageplatte in einer Wandeintiefung so verankert wird, dass die Montageplatte plan an der Wand aufliegen wird. Dazu können Kunststoffnormteile in die Wand eingebaut sein. Es bedarf für den Fachmann auch keiner Zeichnung, um zu veranschaulichen, wie die Kabel in den Halter durch entsprechende Öffnungen im Halter geführt werden.

Es wird zunächst eine erste Ausführungsform beschrieben, in welcher zur Sicherung gegen Abziehen Verriegelungshaken an der Montageplatte vorgesehen sind; danach wird eine weitere Ausführungsform beschrieben, in welcher zur Sicherung gegen Abziehen Laschen an der Montageplatte vorgesehen sind.

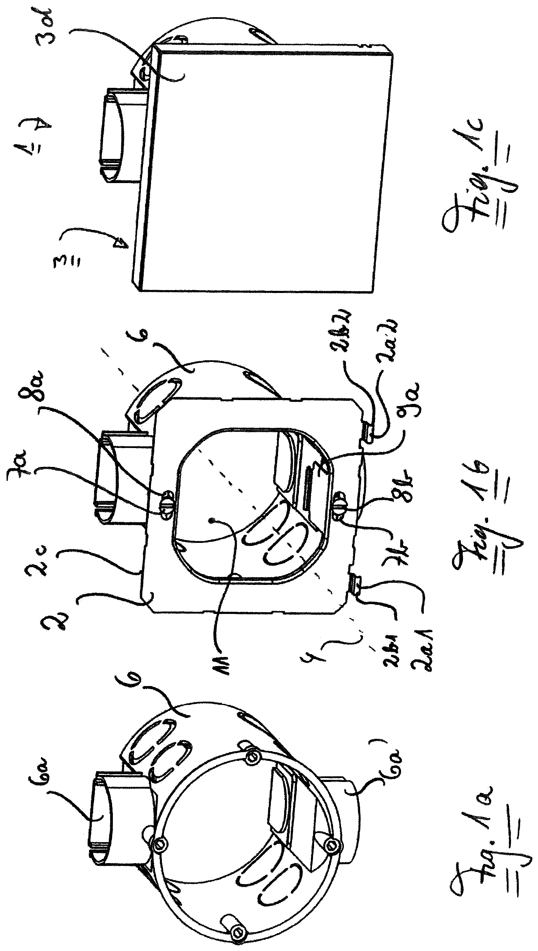

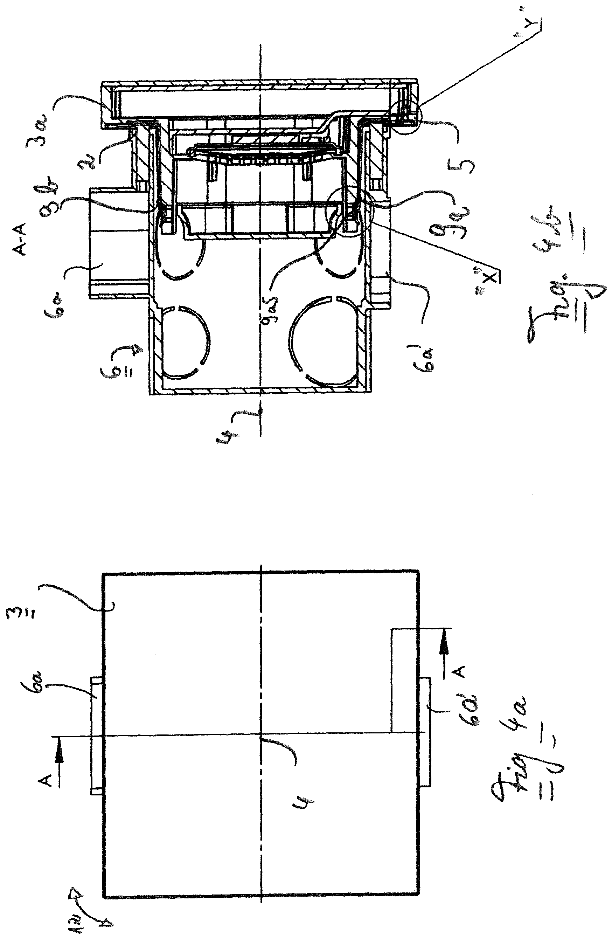

Nach Figur 1 umfasst eine allgemein mit 1 bezeichnete Haustechnikbenutzermodulanordnung eine wandseitige Montageplatte 2 und ein gegen Abziehen verriegeltes, anliegend an hier der Montageplatte gehaltenes Haustechnikbenutzermodul 3. Die Montageplatte 2 weist nun zwei Verriegelungshaken 2a 1, 2a2 auf, die von der Wand nach vorne, d.h. zum Benutzer hin, abstehen und welche vom Montageplattenzentrum 4, angedeutet durch die gestrichelte Linie in Figur Ib sowie Linie 4 in Figur 4b, abgewandte Verriegelungshaken-Eingriffsenden 2b 1, 2b2 besitzen, die an einem am Rand 3a des Haustechnikbenutzermodul gebildeten WiderLager 3b bei fertig montierten Modul (vgl. Figur 4b) verriegelt sind und auf welche eine Durchtrittsöffnung (Figur 4b, Ausschnitt) führt.

Die Montageplatte 2 ist an einem in der Wand fest verankerten Halter 6 mit Schrauben 7a, 7b auf diametral gegenüberliegenden Seiten der Montageplatte 2 angeordnet. Die Montageplatte 2 ist für den Durchtritt der Schrauben 7a, 7b mit Langlöchern 8a, 8b versehen, die auch eine horizontale Ausrichtung der Montageplatte durch Drehung um das Montageplattenzentrum 4 erlauben. Der Halter 6 weist geeignete Kabelzuführöffnungen 6a, 6b auf, durch welche in der Wand geführte Kabel in den Halter hinein geführt werden können.

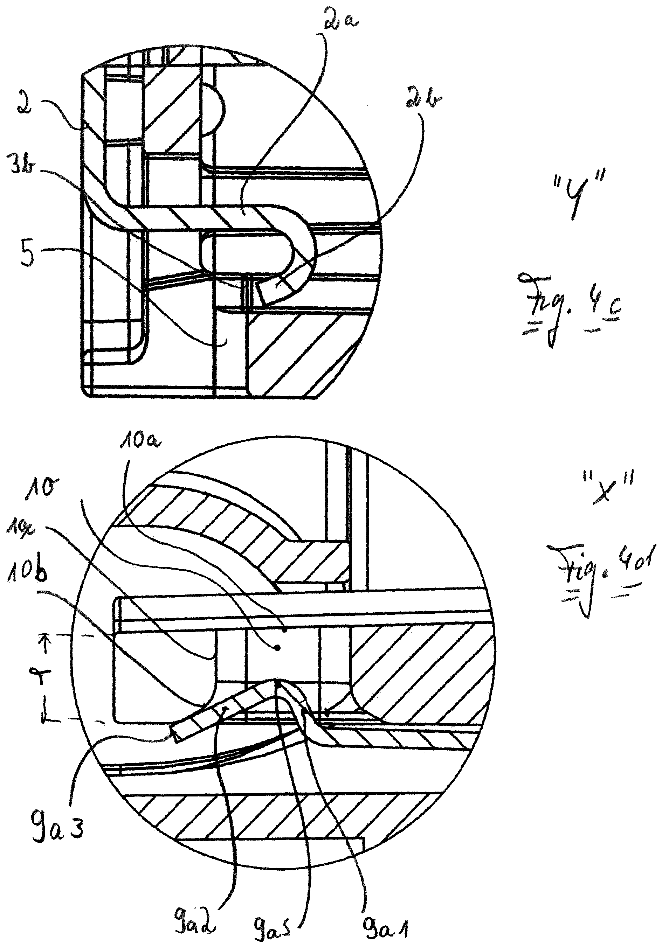

An der Montageplatte sind weiter Federarme, 9a, 9b (vgl. Figur 4) gebildet, die vom Benutzer weg in den Halter hineinragen, vgl. Figur 4 bzw. Figur lb. Die Montageplatte ist weiter mit einem zentralen Durchbruch 11 versehen, der montiert am Halter 6 vor dessen lichter Öffnung liegt, so dass die Federarme 9a, 9b in den Halter treten können. Die Größe der Durchbruchsöffnung 11 ist ausreichend, um das rückwärtige Ende 3c des Haustechnikbenutzermoduls aufzunehmen.

Wie aus Figur 4b ersichtlich, sind die Federarme 9a, 9b beide zunächst so gebogen, dass sie von der Montageplatte weg nicht parallel zur Montageplattenzentrumsachse 4 verlaufen, sondern auf diese zu geneigt sind. Zugleich ist das rückseitige Ende des Haustechnikmoduls ebenfalls mit einer geneigten Randung gebildet, die etwas entfernt von ihrem hinteren Ende eine hier als umlaufende Rille gebildete Eintiefung 10 besitzt. Dies trägt dazu bei, dass die in die Montageplatte einzuschiebenden Module zunächst ohne Behinderung weit eingeschoben werden können, nämlich bis sie mit den Enden der Federarme 9a, 9b in Wechselwirkung treten.

Das Ende der Federarme 9a, 9b ist nun, vergleiche die vergrößert dargestellten Teile von Figur 4, mit ineinander übergehenden Gleitflächen 9a 1, 9a2 versehen, die gegen die allgemeine Richtung der Federarme geneigt sind und in einem der Mittelachse 4 der Montageplatte näher als die weiteren Bereiche der Federarme liegendem Scheitel ineinander übergehen. Dabei ist die näher am Federarmende, also weiter entfernt vom Benutzer liegende Gleitfläche 9a2 länger. Es versteht sich im Übrigen, dass auch der zweite, insoweit identische Federarm 9b entsprechende Gleitflächen haben wird, diese aber nicht separat in einem vergrößerten Ausschnitt dargestellt sind.

Die Eintiefung 10 besitzt eine Tiefe, die ausreicht, um die beiden durch die Einprägung gebildeten, im Scheitel 9aS ineinander übergehenden Gleitflächen 9a1, 9a2 aufzunehmen, ohne dass der Scheitel 9aS in irgendeiner Einschubposition am Boden 10a der Eintiefung anstoßen würde. Die Breite der Eintiefung ist im Vergleich zur Länge der rückseitigen Gleitfläche 9a2 so gewählt, dass selbst bei vollständig eingeschobenem

Benutzermodul die dem Benutzer zugewandte Innenkante am rückseitigen Ende der Eintiefung noch auf der Gleitfläche 9a2 aufliegt. Andernfalls könnte bei entriegeltem Haustechnikmodul ein Herausziehen des Haustechnikmoduls von der Montageplatte nämlich durch Anstoßen des Federarmendes an der Wand 10c der Eintiefung 10 verhindert werden, was einer leichten Austauschbarkeit entgegen stünde.

Am benutzerseitigen Ende ist der Verriegelungshaken 2a ebenfalls durch Umbiegen des Montageplattenbleches einstückig mit der Montageplatte gebildet, wobei das Eingriffsende 2b des Verriegelungshakens bzw. der Verriegelungslasche durch Zurückbiegen von dessen Vorderende realisiert ist. Wie in Figur 4 ersichtlich, liegt die Durchtrittsöffnung 5 für die Einführung eines Entriegelungswerkzeuges, mit dem durch die Öffnung 5 eine Kraft auf den geraden Arm 2a des Verriegelungshakens ausgeübt werden kann, um das Verriegelungshaken-Eingriffsende 2b weg von seinem Widerlager zu drücken, möglichst dicht am von der Montageplatte entfernten Ende des Verriegelungshakens, ist also nahe des Verriegelungshaken-Eingriffsendes angeordnet. In dem dargestellten und bevorzugten Fall einer breiten Verriegelungshakenlasche kann das Widerlager, das im Haustechnikbenutzermodul gebildet ist, für die Durchtrittsöffnung 5 mittig durchbrochen sein. Dies verbessert die Kraftaufbringung auf den Verriegelungshaken und gewährleistet eine bessere Entriegelbarkeit.

Das Haustechnikbenutzermodul weist in der dargestellten Ausführungsform ein hinreichend stabiles, beispielsweise glasfaserverstärktes Kunststoffgehäuse auf. Es wird einzuschätzen sein, dass gegebenenfalls eine Betätigung der Haustechnikbenutzermodule durch druckempfindliche Stellen und so weiter an der Frontplatte möglich ist (nicht gezeigt). Dabei können auch Finger-Wischbewegungen oder dergleichen auf der Vorderseite 3d des Benutzermoduls ausgeübt werden, ohne dass sich dieses durch die dabei wirkenden Kräfte in der Montageplatte oder, gemeinsam mit der Montageplatte, relativ zum Halter bewegt. Die Anordnung wird montiert wie folgt:
Zunächst wird in eine Wand eine für die Halteraufnahme hinreichend dimensionierte Ausnehmung eingebracht, der Halter 6 wie erforderlich in der Wand verankert und Leitungen durch die Wand und die Öffnung 6a bis in den Halter 6 gelegt. Danach kann die Montageplatte 2 in den Halter eingesetzt und mit den Schrauben 7a, 7b befestigt werden.

Da die Federarme 9a, 9b von der Innenwand des Halters 6 beabstandet sind, ist eine horizontale Ausrichtung der Montageplattenkante 2c ohne weiteres möglich, ohne dass die Federarme innen am Halter anstoßen. Die Montageplatte kann wenigstens grob horizontal ausgerichtet werden und wird durch Festdrehen der Schrauben in ihrer Lage am Halter 6 fixiert. Nun kann ein Modul 3 an die durch die Öffnung 6a geführten Leitungen angeschlossen und in die Montageplatte eingeschoben werden.

Das Einschieben erfordert zunächst eine nur geringe Kraft und das Modul ist im Wesentlichen frei beweglich, bis das hintere Ende des Moduls auf die geneigte Fläche 9a 1 trifft.

Die weitere Einschubbewegung des Moduls in die Montageplatte spreizt durch Aufgleiten des Moduls auf den Gleitflächen die Federarme 9a, 9b weg von der Montageplattenzentralachse 4, so dass eine weitere Einschubbewegung nur gegen die Kraft der Federarme erfolgen wird. Dies ist für einen Monteur gut spürbar. Der Monteur kann daher die Eindrückgeschwindigkeit, mit der er das Modul in die Montageplatte drückt, etwas verringern und wird den Einschubvorgang so fortsetzen, bis der Scheitel 9aS in die Eintiefung 10 eindringt. Die durch das noch nicht vollständig tief eingeschobene Modul bereits gespreizten Federarme werden dann durch ihre Rückstellkraft in Richtung auf die Montageplattenzentralachse 4 über die Gleitfächen 9a2 auf das Modul 3 eine Haltekraft ausüben, welche das Modul an die Montageplatte heranzieht, jedoch noch nicht so groß ist, dass der Verriegelungshaken 2a soweit aus seiner Ruhelage ausgelenkt wird, dass die Verriegelungshaken-Eingriffsenden 2b auf ihr Verriegelungshakenwiderlager gleiten. Das Modul 3 wird also dicht an der Montageplatte befindlich sein, ohne bereits verriegelt zu werden, also gegen Entnehmen ohne Werkzeug gesichert zu sein.

Die Breite der Federarme sorgt zudem dafür, dass das Modul 3 nicht um die Achse 4 verdreht stehen wird. Falls etwa der Monteur das Modul 3 verdreht um die Achse 4, wie durch Pfeil 12 (Figur 4) angedeutet, eingesetzt haben sollte, wird aufgrund der breiten Federarme auf das Modul 3 ein Drehmoment um die Achse 4 von den Federarmen 9a, 9b ausgeübt werden, die das Modul in die korrekte Lage relativ zur Montageplatte zwingen.

Das schon fast vollständig an der Wand bzw. der Montageplatte 2 anliegende Modul wird daher eine Horizontal-Ausrichtung besitzen, die auch bei wiederholtem Einschieben, Herausnehmen und Wiedereinschieben des Moduls reproduzierbar ist.

Die Horizontalausrichtung des Moduls kann dann überprüft werden. Falls Korrekturen notwendig sind, kann ohne zusätzliches Werkzeug das Modul wieder von der Montageplatte entfernt werden, die Montageplatte nachjustiert werden und das Modul wieder eingesetzt werden. Ebenso kann eine Funktionsprüfung des Moduls vorgenommen werden, und zwar selbst dann, wenn dies Wisch, Drück- oder Tastbetätigungen auf dem Modul erfordern sollte. Sofern sich bei diesen Überprüfungen ergibt, dass Änderungen der Beschaltung bzw. des Anschlusses vorzunehmen sind, kann das Modul ebenfalls ohne Werkzeug entfernt werden, die erforderliche Änderung bewirkt werden und das Modul wieder auf reproduzierbare Weise zurück in die Montageplatte bewegt werden.

Wenn dann alle entsprechenden erforderlichen Arbeiten abgeschlossen sind, kann das Modul vollständig gegen die Montageplatte 2 gedrückt werden. Dadurch tritt der Verriegelungshaken 2 vermittels seiner Verriegelungshaken-Eingriffsenden 2b mit dem Widerlager 3b in Eingriff, welches am Rand 3a des Moduls 3 gebildet ist.

Wenn danach Dritte wie beispielsweise spielende Kinder versuchen werden, das Modul aus der Montageplatte herauszuziehen, wird dies aufgrund der Verriegelung des Moduls am WiderLager nicht gelingen. Dies gilt sowohl für rein entlang der Achse 4 wirkende Zugkräfte wie auch für verkippende Kräfte, wenn versucht wird, eine Kante des Moduls von der Wand zu entfernen. Auch eine Bewegung, mit der das Modul parallel zur Wand bewegt wird, wird nicht zu einer Freigabe des Verriegelungshakens vom Widerlager führen, weil diese Bewegung stark eingeschränkt ist.

Wenn hingegen eine befugte Person das Modul 3 von der Montageplatte entfernen möchte, kann sie ein geeignetes Werkzeug durch die Durchtrittsöffnung 5 bewegen und damit den Verriegelungsthaken 2a so in Richtung auf das Montageplattenzentrum 4 auslenken, dass sich das Verriegelungshaken-Eingriffsende 2b vom Widerlager 3b löst. Dies kann bei der in Figur 1 gezeigten Anordnung durch gleichzeitige Betätigung der Verriegelungshaken 2a 1 und 2a2 geschehen. Das Modul ist somit nicht mehr verriegelt und kann von der Montageplatte wegbewegt werden.

Es sei darauf hingewiesen, dass Variationen möglich sind. In Figur 1b sind die Verriegelungshaken am äußeren Rand der Montageplatte gebildet. Falls Verschnitt minimiert werden soll, könnten die Verriegelungshaken näher bei der Zentralachse gebildet sein. Weiter sei darauf hingewiesen, dass in dem dargestellten Ausführungsbeispiel des Moduls die Durchtrittsöffnung 5 zugleich das Innenvolumen des Moduls 3 nach außen öffnet, was etwa dann besonders vorteilhaft ist, wenn, wie im dargestellten Ausführungsbeispiel, im Modulinneren ein Lautsprecher vorgesehen ist.

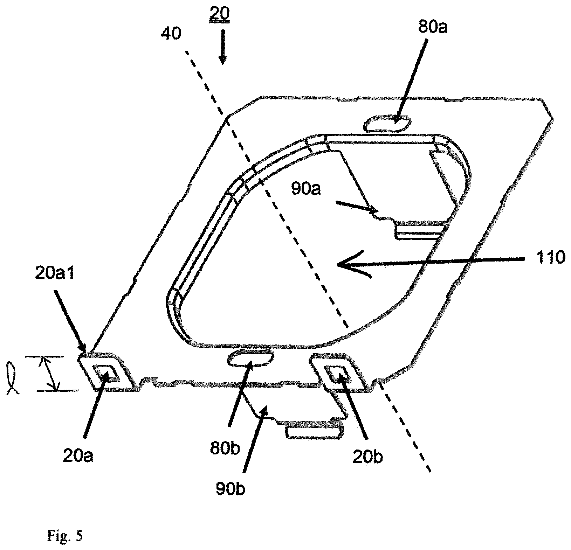

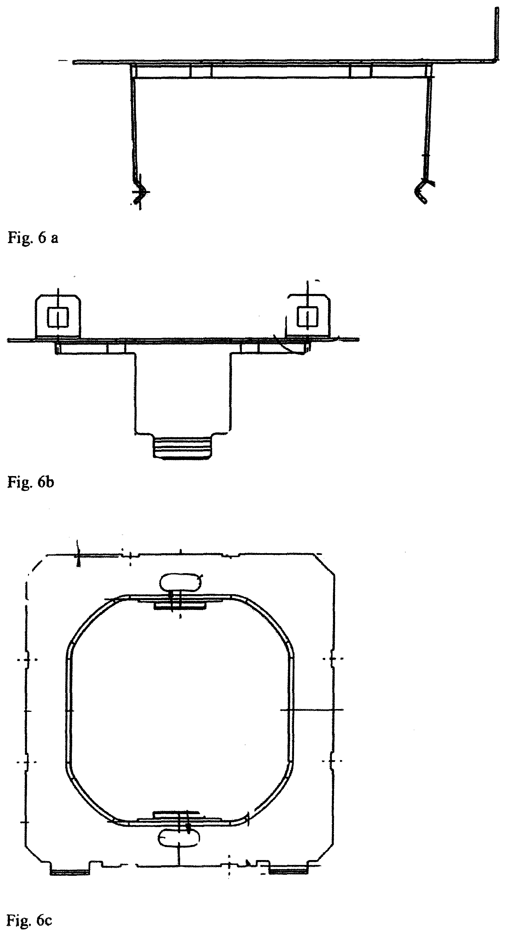

Es ist zudem nicht zwingend, die Sicherungsanordnung wie vorstehend für eine Ausführungsform beschrieben, mit Verriegelungshaken an der Montageplatte zu bilden. Es ist vielmehr ohne weiteres möglich, eine Sicherungsanordnung zur Sicherung des Moduls gegen Abziehen auch durch eine andere Ausgestaltung der Montageplatte zu erreichen, also ein Abziehen der Module auf diese Weise zu verhindern, Dies wird nachfolgend mit Bezug auf die Fig. 5 bis 7 beschrieben.

Zur Sicherung des Moduls gegen Herausziehen von der Wand weg werden dabei an der Montageplatte Laschen gebildet sind, die bei Benutzung, d.h. im montierten Zustand der Montageplatte, von der Wand weg abstehen werden.

Die entsprechende Montageplatte ist in Figur 5 mit Bezugszahl 20 bezeichnet. Die Montageplatte entspricht per se der Montageplatte von Fig. 1 dahingehend, dass auch die in Fig, 5 gezeigte Montageplatte zur Aufnahme eines Moduls ausgebildet ist und das Modul dabei auch zumindest mit jenem Teil, der bei der Modulanbringung durch die Montageplatte hindurch geschoben wird, gleich gebildet ist wie jenes Modul, das mit Bezug auf Fig. 1 erläutert wurde.

Wie sich insoweit also bereits durch Vergleich der Figuren Ib sowie 4b einerseits mit der Figur 5 andererseits ergibt, ist die Montageplatte 20 so geformt, dass sie anstelle der Montageplatte 2 im Halter 6 angeordnet werden könnte. Der Halter kann demgemäß genormt sein.

Wie bei der Montageplatte 2 aus den vorhergehend beschriebenen Figuren sind auch auf diametral gegenüberliegenden Seiten der Montageplatte 20 Langlöcher vorgesehen, die hier mit 80a und 80b bezeichnet sind und die wiederum eine Ausrichtung der Montageplatte durch Drehen um das Montageplattenzentrum, hier mit 40 bezeichnet, zur horizontalen Ausrichtung erlauben.

Es sind wiederum an der Montageplatte 20 Federarme gebildet, die hier mit 90a, 90b bezeichnet sind und die bei Benutzung vom Benutzer weg in den Halter hineinragen, d.h. dann, wenn die Montageplatte 20 in einen Halter wie in Figur 1 gezeigt eingesetzt und daran montiert wird.

Wiederum wird - wie im ersten Ausführungsbeispiel- ein zentraler Durchbruch 110 in im Halter 6 montierten Zustand vor dessen lichter Öffnung liegen, so dass die Federarme 90a, 90b in den Halter hineinragen. Die Größe der Durchtrittsöffnung 110 ist auch hier ausreichend, um das rückwärtige Ende eines Haustechnikmoduls aufzunehmen.

Wiederum sind die Federarme 90a, 90b so gebogen dass sie von der Montageplatte weg nicht parallel zur Montageplattenzentrumsachse 40 verlaufen, sondern auf diese zu geneigt sind. Es bestehen insoweit keine Unterschiede zur Ausbildung der Montageplatte 2 und auch die einzusetzenden Module sind, was deren rückseitiges, bei Benutzung vom Benutzer abgewandtes Ende betrifft, gleich gestaltet.

Die Montageplatte 20 unterscheidet sich allerdings dahingehend von der Montageplatte 2, dass anstelle der bei Montageplatte 2 vorgesehenen zwei Verriegelungshaken 2a 1 2a2, die von der Wand nach vorne abstehen, nunmehr Laschen 20a, 20b gebildet sind, die von der Wand nach vorne abstehen, wenn die Montageplatte in einem Halter 6 angeordnet ist. Die Laschen 20a, 20b sind dabei einstückig mit der Montageplatte 20. Sie weisen eine Ausdehnung derart auf, dass ihre nach vorne zum Benutzer weisende Kante 20a um einen Abstand 1, vergleiche Figur 5, von der Wand beabstandet ist. Die Laschen sind hier allgemein rechtwinklig weg aus der Ebene der Montageplatte gebogen. Im inneren Bereich jeder Laschenfläche 20 ist ein Durchtritt 20al bzw. 20b 1 vorgesehen.

Zur ersten Ausführungsform war beschrieben, dass die Verriegelungshaken an der Montageplatte an Widerlagern an einem montierten Modul verriegeln. Anstelle eines derartigen Widerlagers am Modul sind für die zweite Ausführungsform am Modul andere Mittel vorgesehen, die ebenfalls eine Sicherung der Module an der Montageplatte erlauben, und zwar, indem geeignete Strukturen durch die an der Montageplatte gebildeten Laschen hindurchtreten.

Im in den Figuren dargestellten Ausführungsbeispiel können dazu durch von der Montageplatte 10 vom Zentrum her nach außen durch die Laschen dringende Verriegelungshaken-Eingriff senden vorgesehen sein, die am Modul innenseitig angelenkt sind. Die freien Enden weisen somit bei Benutzung zur Wand hin.

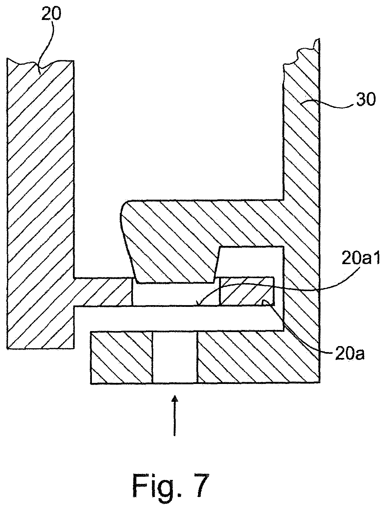

Figur 7 zeigt als Beispiel hierfür ein zum Zusammenwirken mit der Montageplatte 20 vorgesehenes Modul 30, und zwar im Querschnitt an jener Stelle, wo an der Montageplatte 20 die Lasche 20 vorgesehen ist und Arme von der Montageplatte durch die Durchtrittsöffnung 20a 1 führen. Wie ersichtlich, steht auf der zum Halter gewandten Innenseite des Moduls 30 bei jeder Lasche ein Riegelarm mit einem Ansatz vor. Riegelarm und Ansatz sind so angeordnet, dass bei auf dem Halter 6 anliegenden Modul 30 der Ansatz jeweils in die entsprechende Durchtrittöffnung 20a, 20b der Lasche eindringt. Dazu ist der Riegelarm so lang, dass der Ansatz bis in die Laschenöffnung eindringt. Der Riegelarm liegt bei montiertem Modul oberhalb der Laschenkante, und zwar so weit, dass der von ihm nach unten weisenden Ansatz wenigstens partiell in die Laschenöffnung eindringt.

Wie aus Fig. 7 ersichtlich, ist die dem Halter zugewandte Seite des Ansatzes zudem leicht abgerundet, wodurch bei Einsetzen des Moduls der Riegelarm mit seinem gerundeten Ansatzkante an der Laschenkante zunächst abgelenkt wird und damit ein Einsetzen des Moduls erleichtert.

Das der Modulinnenseite zugewandte Ende des Ansatzes ist hingegen steiler geneigt und zwar so steil, dass bei einem Abziehen des Moduls der Ansatz nicht weg aus der Durchtrittsöffnung in der Lasche ausgelenkt wird, sondern der Ansatz in dieser verbleibt, bis er von der anderen Seite der Durchtrittsöffnung her nach oben weggedrängt wird. Zu diesem Zweck ist eine Durchtrittsöffnung 50 in der Modulkante vorgesehen, die bei montiertem Modul unmittelbar unter der Durchtrittsöffnung in der Lasche liegt und so dimensioniert ist, dass ein Entriegel-Werkzeug wie ein dünner Stift durch die in der Modulkante vorgesehene Durchtrittsöffnung 50 bis auf den Ansatz geführt werden kann, um diesen nach oben zu drücken. Wiederum öffnet - wie in der ersten Ausführungsform - die Durchtrittsöffnung 50 zugleich das Innenvolumen des Moduls 3 auch bei auf dem Halter 6 anliegenden Modulrand nach außen, was wiederum dort vorteilhaft ist, wo z.B. im Modulinneren ein Lautsprecher vorgesehen ist oder aus anderem Grund ein Druckausgleich erwünscht ist.

Der so gestaltete Ansatz am Riegelarm hat zugleich den Vorteil, dass er in der Lasche aufgrund der geneigten Seitenflächen zentriert wird. Um eine solche Zentrierung nicht in Richtung auf die Wand zu, sondern auch in der Wandebene zu bewirken, können auch die seitlichen Bereiche des Ansatzes abgeschrägt sein, so dass der Ansatz am Riegelarm allgemein ähnlich einem vierseitigen Pyramidenstumpf zuläuft.

Diese Anordnung wird verwendet wie folgt:
Zunächst wird in eine Wand eine für die Halteraufnahme hinreichend dimensionierte Ausnehmung eingebracht, der Halter wie erforderlich in der Wand verankert und Leitungen durch die Wand und die Öffnung bis in den Halter gelegt. Danach kann die zweite Ausführungsform der Montageplatte in den Halter eingesetzt und mit Schrauben locker befestigt werden.

Da die Federarme 90a, 90b der Montageplatte 20 von der Innenwand des Halters 6 beabstandet sind, ist eine horizontale Ausrichtung der Montageplattenkante ohne weiteres möglich, ohne dass die Federarme innen am Halter anstoßen. Die Montageplatte kann allgemein horizontal ausgerichtet werden und wird dann durch Festdrehen der Schrauben in ihrer Lage am Halter fixiert.

Nun kann ein zur zweiten Ausführungsform der Montageplatte passendes Modul an die durch die Öffnung geführten Leitungen angeschlossen und in die Montageplatte eingeschoben werden.

Das Einschieben erfordert - wie bei der ersten Ausführungsform - zunächst eine nur geringe Kraft und das Modul ist im Wesentlichen frei beweglich, bis das hintere Ende des Moduls auf die geneigte Fläche der Federarme trifft.

Die weitere Einschubbewegung des Moduls in die Montageplatte spreizt durch Aufgleiten des Moduls auf den Gleitflächen die Federarme 90a, 90b weg von der Montageplattenzentralachse 40, so dass eine weitere Einschubbewegung nur gegen die Kraft der Federarme erfolgen wird. Dies ist für einen Monteur gut spürbar. Der Monteur kann daher die Eindrückgeschwindigkeit, mit der er das Modul in die Montageplatte drückt, etwas verringern und wird den Einschubvorgang so fortsetzen, bis der Scheitel in die Eintiefung eindringt. Die durch das noch nicht vollständig tief eingeschobene Modul bereits gespreizten Federarme werden dann durch ihre Rückstellkraft in Richtung auf die Montageplattenzentralachse 40 über die Gleitfächen au das Modul eine Haltekraft ausüben, welche das Modul an die Montageplatte heranzieht, jedoch noch nicht so groß ist, dass die am Modulrahmen vorgesehenen Verriegelungshaken-Eingriffsenden soweit aus ihrer Ruhelage ausgelenkt werden, dass sie in die Laschen gelangen. Das Modul 3 wird also dicht an der Montageplatte befindlich sein, ohne bereits an der Lasche in verriegelnden Eingriff zu treten.

Die Breite der Federarme sorgt zudem dafür, dass das Modul nicht um die Achse 40 verdreht stehen wird. Falls etwa der Monteur das Modul verdreht um die Achse 40 eingesetzt haben sollte, wird aufgrund der breiten Federarme ein Drehmoment um die Achse 40 von den Federarmen 90a, 90b auf das Modul ausgeübt werden, was das Modul in die korrekte Lage relativ zur Montageplatte zwingt.

Das schon fast vollständig an der Wand bzw. der Montageplatte 20 anliegende Modul wird daher eine Horizontal-Ausrichtung besitzen, die auch bei wiederholtem Einschieben, Herausnehmen und Wiedereinschieben des Moduls reproduzierbar ist.

Die Horizontalausrichtung des Moduls kann dann überprüft werden. Falls Korrekturen notwendig sind, kann ohne zusätzliches Werkzeug das Modul wieder von der Montageplatte entfernt werden, die Montageplatte nachjustiert werden und das Modul wieder (partiell) eingesetzt werden. Ebenso kann eine Funktionsprüfung des Moduls vorgenommen werden, und zwar selbst dann, wenn dies Wisch, Drück- oder Tastbetätigungen auf dem Modul erfordern sollte. Sofern sich bei diesen Überprüfungen ergibt, dass Änderungen der Beschaltung bzw. des Anschlusses vorzunehmen sind, kann das Modul ebenfalls ohne Werkzeug entfernt werden, die erforderliche Änderung bewirkt werden und das Modul wieder auf reproduzierbare Weise zurück in die Montageplatte bewegt werden.

Wenn dann alle entsprechenden erforderlichen Arbeiten abgeschlossen sind, kann das Modul vollständig gegen die Montageplatte 2 gedrückt werden. Dadurch verriegeln die Verriege-Iungshaken-Eingriffsenden in den Laschen, die an der Montageplatte gebildet sind.

Wenn danach Dritte wie beispielsweise spielende Kinder versuchen werden, das Modul aus der Montageplatte herauszuziehen, wird dies aufgrund der Sicherung des Moduls an der Montageplatte nicht gelingen. Dies gilt sowohl für rein entlang der Achse 4 wirkende Zugkräfte wie auch für verkippende Kräfte, wenn versucht wird, eine Kante des Moduls von der Wand zu entfernen.

Wenn hingegen eine befugte Person das Modul von der Montageplatte entfernen möchte, kann sie ein geeignetes Werkzeug durch die Durchtrittsöffnung bewegen und damit die Verriegelungshaken-Eingriffsenden in Richtung auf das Montageplattenzentrum auslenken, so dass sich das Verriegelungshaken-Eingriffsenden aus der Lasche löst. Das Modul ist somit nicht mehr verriegelt und kann von der Montageplatte wegbewegt werden.

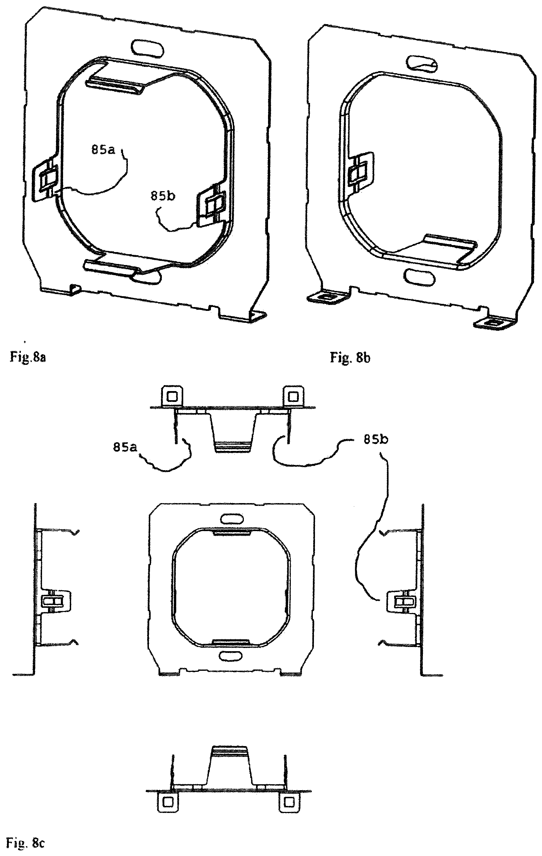

Die vorstehend beispielhaft gezeigte Montageplatte kann, ohne von den erläuterten Prinzipien abzuweichen, anders als vorbeschrieben gestaltet oder um zusätzliche Elemente ergänzt werden. So ist in den Fig. 8 a, b und c eine Ausführungsform einer Montageplatte gezeigt, bei welcher zusätzlich seitlich der Durchbruchsöffnung, in welche das Haustechnikmodul eingesetzt wird, Erdungslaschen vorgesehen sind. Die Erdungslaschen 85a bzw. 85b können dazu verwendet weden, zwischen der Montageplatte und anderen Einheiten wie dem Haustechnikmodul und/oder einem Erdleiter eine elektrische erdende Verbindung herzustellen. Zusätzlich zu diesen Erdungslaschen sind dieselben Mittel vorgesehen, die in den vorbeschriebenen Ausführungsformen eine Kindersicherung, eine leichte Ausrichtbarkeit, eine Verrastung bzw. eine Verriegelung usw. bewirken. Sowohl die bauliche Ausgestaltung als auch die Funktion dieser Mittel wird einsichtigerweise nicht durch die Erdungslaschen und die mit diesen bewirkte Erdung beeinträchtigt, so dass das Ausführungsbeispiel von Fig. 8 insoweit nicht nur wie ersichtlich identisch gebaut, sondern auch identisch verwendet werden kann. Aus diesem Grund wurde zur Verbesserung der Übersichtlichkeit auch von der Einzeichnung weiterer Bezugszeichen in den Fig. 8a -8c abgesehen.

## Patentansprüche

1. Haustechnik-Benutzermodulanordnung mit einer wandseitigen Montageplatte (2),
und einem daran anliegend gehaltenen, gegen Abziehen gesicherten Haustechnik-Benutzermodul,
wobei
ein im Gebrauch fest in der Wand verankerter Halter vorhanden ist,
an welchem die Montageplatte während der Montage
ausrichtbar und nach Horizontalausrichtung im montierten Zustand
angeschraubt ist,
die Montageplatte
als Rahmenplatte mit einem Durchbruch gebildet ist, durch welchen die vom Benutzer abgewandte Rückseite des Haustechnik-Benutzermoduls im montierten Zustand ragt,
eine zum Benutzer hin von der Wand abstehende Sicherungsanordnung zur Sicherung des Haustechnik-Benutzermodul gegen Abziehen aufweist,
und
einen vom Benutzer weg führenden Federarm aufweist, der so dimensioniert und angeordnet ist, dass die durch den Rahmen-Durchbruch ragende Rückseite des Haustechnik-Benutzermoduls am freiem Federarm-Ende unter Auslenkung des Federarms aus dessen Ruhelage vorbeigleitet, bevor die Sicherungsanordnung gegen Abziehen das Modul gesichert hat,
und das Haustechnik-Benutzermodul (3)
einen Rand aufweist, der
für den Sicherungs-Eingriff mit der von der Wand abstehenden Sicherungsanordnung der Montageplatte ausgebildet ist
und eine Durchtrittsöffnung aufweist, durch welche ein Werkzeug führbar ist, mit dem die Sicherungsanordnung unter Verwendung des Werkzeuges außer Eingriff zu bringen ist,
und wobei das Haustechnik-Benutzermodul (3)
an seinem vom Benutzer abgewandten Ende im montierten Zustand eine Eingriffsstelle aufweist, an welcher durch den Federarm eine das Haustechnik-Benutzermodul bereits in Anlage zwingende Kraft ausübbar ist, noch bevor die Sicherungsanordnung das Modul gegen Abziehen sichert.

2. Haustechnik-Benutzermodulanordnung nach dem vorhergehenden Anspruch, **dadurch gekennzeichnet, dass** die Sicherungsanordnung montageplattenseitig mit einer von der Wand abstehenden Lasche gebildet ist, in welcher eine Öffnung, bevorzugt ein Durchtrittsloch, vorgesehen ist, und am Rand des Haustechnik-Benutzermoduls ein Ansatz angeordnet ist, der im Sicherungsfall zumindest in, bevorzugt durch die Öffnung geführt ist und zum Abziehen von der Öffnung weg beweglich ist.

3. Haustechnik-Benutzermodulanordnung nach dem vorhergehenden Anspruch, **dadurch gekennzeichnet, dass** der Ansatz am Rand des Haustechnik-Benutzermoduls ein Verriegelungshaken ist, der in das Durchtrittsloch eindringt und der zum Abziehen unter Verwendung des durch die DurchtrittsÖffnung führbaren Werkzeuges in Richtung auf die Montageplattenmitte außer Eingriff gedrückt werden kann.

4. Haustechnik-Benutzermodulanordnung nach Anspruch 1, **dadurch gekennzeichnet, dass** die Montageplatte (2) als Sicherungsanordnung zur Sicherung des Moduls gegen Abziehen mindestens einen Verriegelungshaken aufweist, der von der Wand absteht und welcher auf der vom Montageplattenzentrum abgewandten Seite ein Verriegelungshaken-Eingriffsende besitzt,
und dass das Haustechnik-Benutzermodul einen Rand aufweist, der für den Sicherungs-Eingriff mit den Verriegelungshaken dadurch ausgebildet ist, dass er zum Montageplattenzentrum hin ein Verriegelungshaken-Eingriffsende-Widerlager besitzt, wobei die zur Sicherungsanordnung führende Durchtrittsöffnung im Rand auf die Verriegelungshaken führt.

5. Haustechnik-Benutzermodulanordnung nach einem der vorhergehenden Ansprüche, **dadurch gekennzeichnet, dass** das Haustechnik-Benutzermodul als und/oder mit zumindest einem von Sensor, bevorzugt Temperatursensor, Bewegungssensor, Geräuschsensoren und/oder Rauch-Detektor; Ein-Aus-Schaltung; Dimmer; drahtlose Fernsteuerung; Display; Gegensprechstelle ausgebildet ist.

6. Haustechnik-Benutzermodulanordnung nach einem der vorhergehenden Ansprüche, **dadurch gekennzeichnet, dass** die Montageplatte (2) Lang- und/oder Bogenlöcher aufweist und der Halter Schraubenaufnahmen zum Anschrauben der Montageplatte (2) umfasst.

7. Haustechnik-Benutzermodulanordnung nach einem der vorhergehenden Ansprüche, **dadurch gekennzeichnet, dass** die Montageplatte (2)einstückig aus Metallblech gebildet ist.

8. Haustechnik-Benutzermodulanordnung nach einem der vorhergehenden Ansprüche, **dadurch gekennzeichnet, dass** das Haustechnik-Benutzermodul an der die Montageplatte (2) umgebenden Wand oder der Montageplatte (2) selbst aufliegt, bevorzugt mit einer Dichtung gegen Feuchtigkeit, besonders bevorzugt einem auf der Montageplatte (2) aufliegenden Dichtring, und das bevorzugt der Rand des Haustechnik-Benutzermoduls durch einen umlaufenden Kragen gebildet ist.

9. Haustechnik-Benutzermodulanordnung nach einem der vorhergehenden Ansprüche, **dadurch gekennzeichnet, dass** das Haustechnik-Benutzermodul rückseitig eine Eintiefung aufweist, der Federarm an seinem freien Ende unter Bildung einer Gleitfläche derart gebogen ist, dass die Gleitfläche auf dem zum Benutzer weisenden Rand der Eintiefung aufliegt, wobei mehrere Federarme vorgesehen sind und die Federarmbreite so groß ist, dass ein noch nicht gesichertes, aber bereits durch die Federarms gehaltenes Modul eine reproduzierbare Ausrichtung relativ zur Montageplatte (2) einnimmt.

10. Haustechnik-Benutzermodulanordnung nach dem vorhergehenden Anspruch, **dadurch gekennzeichnet, dass** zumindest zwei gegenüberliegende Federarme, insbesondere zwei diametral zur Einschubachse gelegene Federarme, vorgesehen sind.

11. Haustechnik-Benutzermodulanordnung nach einem der vorhergehenden Ansprüche, **dadurch gekennzeichnet, dass** zur Sicherung Verriegelungshaken vorgesehen sind, die an einem Widerlager in Eingriff treten, wobei die Federkraft des Federarmes nur so groß bzw. die Federarme so dimensioniert sind, ist, dass das Haustechnik-Benutzermodul ohne zusätzliche, eindrückende Kraft nicht an den Verriegelungshaken vorbei an die Montageplatte (2) herangezogen wird, sondern noch von der Montageplatte (2) abgezogen werden kann, aber die Federkraft ausreicht, um das noch nicht verriegelte Modul gegen eine ungewollte Herausbewegung zu sichern.

12. Haustechnik-Benutzermodulanordnung nach dem vorhergehenden Anspruch, **dadurch gekennzeichnet, dass** die Verriegelungshaken wesentlich schmaler sind als die Federarmbreite und mehrere beabstandete Verriegelungshaken vorgesehen sind.

13. Haustechnik-Benutzermodulanordnung nach einem der vorhergehenden Ansprüche, **dadurch gekennzeichnet, dass** die Durchtrittsöffnung zur Bodenseite hin angeordnet ist, insbesondere zwischen Wand- bzw. Montageplatte (2) und Rand angeordnet ist.

## Claims

1. Domestic user module arrangement comprising a wall-side mounting plate (2), which rests flat on a wall in a mounted state, and a domestic user module, which is held with contact on the mounting plate and is secured against being removed,
wherein
a holder is provided, which can be firmly anchored in the wall and with which the mounting plate can be aligned and to which the mounting plate is bolted after horizontal alignment,
the mounting plate is formed as a frame plate with an aperture through which the rear side of the domestic user module, the rear side facing away from the user, protrudes in the mounted state, has a securing arrangement, which projects from the wall towards the user, for securing the domestic user module against removal,
and
has a spring arm, which leads away from the user and is dimensioned and arranged such that the rear side of the domestic user module, which protrudes through the frame aperture, slides past the free spring arm end with deflection of the spring arm from its neutral position, before the securing arrangement has secured the module against being removed,
and the domestic user module (3)
has an edge, which is designed for securing engagement with the securing arrangement of the mounting plate, the securing arrangement projecting from the wall,
and has a passage opening, through which a tool can be guided, by way of which tool the securing arrangement can be moved out of engagement using the tool,
and wherein the domestic user module (3)
has, at its end facing away from the user in the mounted state, an engagement point, at which a force already forcing the domestic user module into contact can be exerted by the spring arm, even before the securing arrangement secures the module against being removed.

2. Domestic user module arrangement according to the preceding claim, **characterized in that** the securing arrangement is formed on the mounting plate side with a tab projecting from the wall, in which tab an opening, preferably a passage hole, is provided, and an attachment is arranged at the edge of the domestic user module, which attachment, in the event of securing, is guided at least in, preferably through, the opening and can be moved away from the opening for removal purposes.

3. Domestic user module arrangement according to the preceding claim, **characterized in that** the attachment at the edge of the domestic user module is a locking hook, which enters the passage hole and which can be pushed out of engagement in the direction of the mounting plate centre using the tool, which can be guided through the passage opening, for removal purposes.

4. Domestic user module arrangement according to Claim 1, **characterized in that** the mounting plate (2) has, as a securing arrangement for securing the module against being removed, at least one locking hook, which projects from the wall and which has a locking hook engagement end on the side facing away from the mounting plate centre,
and **in that** the domestic user module has an edge which, for the securing engagement with the locking hooks, is formed **in that** it has a locking hook engagement end abutment towards the mounting plate centre, wherein the passage opening, which leads to the securing arrangement, in the edge leads to the locking hooks.

5. Domestic user module arrangement according to any of the preceding claims, **characterized in that** the domestic user module is designed as and/or with at least one from amongst a sensor, preferably a temperature sensor, a motion sensor, noise sensors and/or a smoke detector; an on-off circuit; a dimmer; a wireless remote control system; a display; an intercom.

6. Domestic user module arrangement according to any of the preceding claims, **characterized in that** the mounting plate (2) has elongate and/or arcuate holes and the holder comprises screw receptacles for bolting the mounting plate (2) to the holder.

7. Domestic user module arrangement according to any of the preceding claims, **characterized in that** the mounting plate (2) is formed in one piece from sheet metal.

8. Domestic user module arrangement according to any of the preceding claims, **characterized in that** the domestic user module rests on the wall surrounding the mounting plate (2) or on the mounting plate (2) itself, preferably with sealing against moisture, particularly preferably a sealing ring resting on the mounting plate (2), and that preferably the edge of the domestic user module is formed by an encircling collar.

9. Domestic user module arrangement according to any of the preceding claims, **characterized in that** the domestic user module has, on the rear side, a recess, the spring arm is, at its free end, bent with formation of a sliding surface in such a way that the sliding surface rests on the edge of the recess that faces the user,
wherein a plurality of spring arms are provided and the spring arm width is of such a size that a module that has not yet been secured but is already held by the spring arms assumes a reproducible orientation relative to the mounting plate (2).

10. Domestic user module arrangement according to the preceding claim, **characterized in that** at least two opposite spring arms, in particular two spring arms positioned diametrically opposite with respect to the insertion axis, are provided.

11. Domestic user module arrangement according to any of the preceding claims, **characterized in that** locking hooks, which engage on an abutment, are provided for securing purposes, wherein the spring force of the spring arm is only of such a size or the spring arms are dimensioned such that the domestic user module is not pulled past the locking hooks to the mounting plate (2) without additional pressing-in force, but rather can still be removed from the mounting plate (2), but the spring force is sufficient to secure the module, which has not yet been locked, against being unintentionally moved out.

12. Domestic user module arrangement according to the preceding claim, **characterized in that** the locking hooks are substantially narrower than the spring arm width and a plurality of spaced-apart locking hooks are provided.

13. Domestic user module arrangement according to any of the preceding claims, **characterized in that** the passage opening is arranged at the bottom side, in particular between the wall or mounting plate (2) and the edge.

## Revendications

1. Agencement de module utilisateur de domotique, comprenant une plaque de montage côté mur (2) qui repose dans un état monté à plat contre un mur, et un module utilisateur de domotique maintenu de manière adjacente à celle-ci en étant protégé contre l'extraction,
dans lequel
un support pouvant être ancré solidement dans le mur est présent sur lequel la plaque de montage peut être alignée et vissée après alignement horizontal,
la plaque de montage est formée comme une plaque d'encadrement avec un ajour à travers lequel la face arrière, détournée de l'utilisateur, du module utilisateur de domotique fait saillie à l'état monté, présentant un agencement de protection dépassant du mur en direction de l'utilisateur pour protéger le module utilisateur de domotique contre l'extraction,
et
présente un bras faisant ressort s'écartant de l'utilisateur, qui est dimensionné et disposé de telle sorte que la face arrière, faisant saillie à travers l'ajour d'encadrement, du module utilisateur de domotique coulisse devant l'extrémité libre du bras faisant ressort en déviant le bras faisant ressort de sa position de repos avant que l'agencement de sécurité n'ait protégé le module contre l'extraction,
et le module utilisateur de domotique (3) présente un bord qui est réalisé pour la mise en prise de protection avec l'agencement de protection, dépassant du mur, de la plaque de montage
et présente une ouverture de passage à travers laquelle un outil peut être guidé avec lequel l'agencement de protection est à dégager en utilisant l'outil,
et dans lequel le module utilisateur de domotique (3)
présente à l'état monté à son extrémité détournée de l'utilisateur un point de mise en prise auquel le bras faisant ressort peut exercer une force contraignant déjà en butée le module utilisateur de domotique avant même que l'agencement de protection ne protège le module contre l'extraction.

2. Agencement de module utilisateur de domotique selon la revendication précédente, **caractérisé en ce que** l'agencement de protection est formé côté plaque de montage avec une patte dépassant du mur, dans laquelle est prévue une ouverture, de préférence un trou de passage, et un épaulement est disposé au bord du module utilisateur de domotique qui est guidé en cas de protection au moins dans, de préférence à travers l'ouverture et est mobile en s'éloignant de l'ouverture pour l'extraction.

3. Agencement de module utilisateur de domotique selon la revendication précédente, **caractérisé en ce que** l'épaulement au bord du module utilisateur de domotique est un crochet de verrouillage qui pénètre dans le trou de passage et qui peut être poussé hors prise pour l'extraction en utilisant l'outil pouvant être guidé à travers l'ouverture de passage en direction du centre de plaque de montage.

4. Agencement de module utilisateur de domotique selon la revendication 1, **caractérisé en ce que** la plaque de montage (2) présente comme agencement de protection pour la protection du module contre l'extraction au moins un crochet de verrouillage qui dépasse du mur et qui possède une extrémité de mise en prise de crochet de verrouillage sur le côté détourné du centre de plaque de montage,
et **en ce que** le module utilisateur de domotique présente un bord qui est réalisé pour la mise en prise de protection avec le crochet de verrouillage **en ce qu'**il possède en direction du centre de plaque de montage une culée d'extrémité de mise en prise de crochet de verrouillage, dans lequel l'ouverture de passage menant à l'agencement de protection mène dans le bord aux crochets de verrouillage.

5. Agencement de module utilisateur de domotique selon l'une quelconque des revendications précédentes, **caractérisé en ce que** le module utilisateur de domotique est réalisé comme et/ou avec au moins un élément parmi un capteur, de préférence un capteur de température, un capteur de mouvement, des capteurs de bruit et/ou un détecteur de fumée ; un interrupteur marche/arrêt ; un variateur ; une télécommande sans fil ; un dispositif d'affichage ; un interphone.

6. Agencement de module utilisateur de domotique selon l'une quelconque des revendications précédentes, **caractérisé en ce que** la plaque de montage (2) présente des trous oblongs et/ou des trous arqués et le support comprend des logements de vis pour visser la plaque de montage (2).

7. Agencement de module utilisateur de domotique selon l'une quelconque des revendications précédentes, **caractérisé en ce que** la plaque de montage (2) est formée d'un seul tenant en tôle métallique.

8. Agencement de module utilisateur de domotique selon l'une quelconque des revendications précédentes, **caractérisé en ce que** le module utilisateur de domotique repose contre le mur entourant la plaque de montage (2) ou sur la plaque de montage (2) elle-même, de préférence avec un joint d'étanchéité contre l'humidité, de manière particulièrement préférée une bague d'étanchéité reposant sur la plaque de montage (2), et **en ce que** de préférence le bord du module utilisateur de domotique est formé par une collerette périphérique.

9. Agencement de module utilisateur de domotique selon l'une quelconque des revendications précédentes, **caractérisé en ce que** le module utilisateur de domotique présente un creux sur la face arrière, le bras faisant ressort étant courbé à son extrémité libre en formant une surface de glissement de telle sorte que la surface de glissement repose sur le bord du creux, tournée vers l'utilisateur,
dans lequel plusieurs bras faisant ressort sont prévus, et la largeur de bras faisant ressort est suffisamment grande pour qu'un module pas encore protégé mais déjà maintenu par les bras faisant ressort adopte un alignement reproductible par rapport à la plaque de montage (2).

10. Agencement de module utilisateur de domotique selon la revendication précédente, **caractérisé en ce qu'**au moins deux bras faisant ressort opposés, en particulier deux bras faisant ressort situés diamétralement par rapport à l'axe d'insertion, sont prévus.

11. Agencement de module utilisateur de domotique selon l'une quelconque des revendications précédentes, **caractérisé en ce que** des crochets de verrouillage sont prévus pour la protection, qui viennent en prise au niveau d'une culée, dans lequel la force de ressort du bras faisant ressort n'est pas plus grande, ou les bras faisant ressort sont dimensionnés de telle sorte, que le module utilisateur de domotique n'est pas attiré sans force de poussée supplémentaire devant les crochets de verrouillage contre la plaque de montage (2) mais peut toujours être extrait de la plaque de montage (2), la force de ressort étant toutefois suffisante pour protéger le module pas encore verrouillé contre un mouvement de sortie involontaire.

12. Agencement de module utilisateur de domotique selon l'une quelconque des revendications précédentes, **caractérisé en ce que** les crochets de verrouillage sont nettement plus étroits que la largeur de bras faisant ressort, et **en ce que** plusieurs crochets de verrouillage espacés sont prévus.

13. Agencement de module utilisateur de domotique selon l'une quelconque des revendications précédentes, **caractérisé en ce que** l'ouverture de passage est disposée vers la face inférieure, en particulier entre la plaque murale ou de montage (2).
